# EUROPÄISCHE PATENTSCHRIFT

(11) **EP 0 903 000 B1**
(45) Veröffentlichungstag und Bekanntmachung des Hinweises auf die Patenterteilung: **29.05.2002**
(21) Anmeldenummer: 98913645.2
(22) Anmeldetag: 05.03.1998
(51) Int. Cl.: H02K 1/27, H02K 1/24

(54) **KLAUENPOLMASCHINE**
CLAW-POLE MACHINE
MACHINE A POLES A GRIFFES

(30) Priorität: 21.03.1997 DE 19711750
(43) Veröffentlichungstag der Anmeldung: 24.03.1999
(73) Patentinhaber: DaimlerChrysler AG, 70567 Stuttgart (DE)
(72) Erfinder: FREISE, W., D-67663 Kaiserslautern (DE)
(74) Vertreter: Maute, Hans-Jürgen, Dipl.-Ing.
(86) Internationale Anmeldenummer: EP9801237
(87) Internationale Veröffentlichungsnummer: WO9843339

(56) Entgegenhaltungen:
- EP-A- 0 723 330
- DE-A- 19 502 148
- DE-A- 19 502 184

## Beschreibung

Klauenpolmaschinen sind Synchronmaschinen, bei denen man nur eine Polradspule benötigt, um sämtliche Erregerpole elektrisch mit der für das Luftspaltfeld nötigen magnetischen Erregung zu versorgen. Sie sind vor allem für höhere Polpaarzahlen p geeignet, weil die andernfalls erforderliche Schenkelpolausführung zu wenig Platz für die Einzelpolspulen bietet.

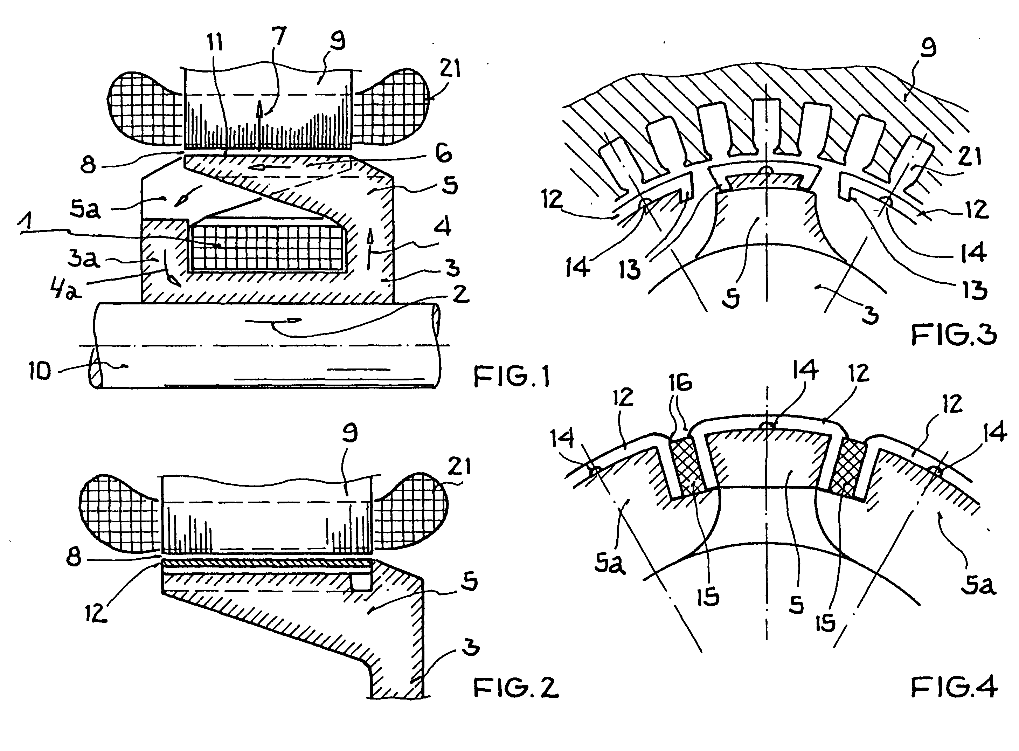

Klauenpol-Synchronmaschinen sind bewährte Maschinen zur Stromerzeugung im Bereich kleiner Leistungen. Die einzige Erregerspule 1 erzeugt ein Magnetfeld in axialer Richtung 2, das sich auf die Klauenpole am Rotorumfang aufteilt und infolge der abwechselnd ineinandergreifenden Klauenpole im Luftspalt als Magnetfeld mit wechselnder Polarität erscheint (s. Fig. 1).

Aus den europäischen Patentschriften EP 0394528B1 und EP 0 723 330 A2 ist bekannt, zwecks Verhinderung der magnetischen Streuung zwischen den Klauenpolfingem und den Polen des Klauenpolzahnrads tangential wirkende Dauermagnete anordnen, die das Luftspaltfeld der Erregerspulen bei entsprechender Auslegung noch unterstützen. Bei abgeschalteter elektrischer Erregung schließt sich das Dauermagnetfeld über Klauenpolzahnrad, Klauenpolfingersysteme und Erregerjoche magnetisch kurz, d.h. trotz Dauermagneterregung ist das Gesamt-Luftspaltfeld voll stellbar.

Aus der DE 19502184 A1 ist eine Klauenpolmaschine entsprechend des Oberbegriffs des unabhängigen Anspruchs bekannt. In der DE 19502184A1 wird auf ein Eisenblech ein Trafoblech aufplattiert. Aus den Verbund wird in nach folgenden Prozeßschritten der Klauenpol durch Ausstanzen und Kaltverformen aus den plattierten Eisenblech gefertigt. Der so hergestellte Läufer wird danach auf den Enddurchmesser abgedreht.

Bei höheren Leistungen ist die Klauenpolausführung jedoch problematisch, weil die magnetisch axial wirkende Erregerspule den gesamten Erregernutzfluß und den Streufluß aller p Rotorpole einer Klauenseite umfassen muß. Infolgedessen muß das durch die Erregerspule axial hindurchgehende zylindrische Erregerjoch einen durch die zumutbare magnetische Sättigung bedingten Mindestdurchmesser haben, der den Raum für die Erregerspule radial stark einengt, es sei denn, man beschränkt sich auf axial kurze Statoren. Das hat dann hohe Polzahlen zur Folge, was bei gegebener Drehzahl die Ummagnetisierungsfrequenz hochtreibt. Diese verursacht höhere Verluste, besonders in den Eisenteilen.

Der Erfindung liegt die Aufgabe zugrunde, diese Verluste herabzusetzen, ohne die mechanische Stabilität der Polanordnung zu verschlechtern.

Diese Aufgabe wird durch die Merkmale des Anspruchs 1 gelöst. Weiterbildungen der Erfindung sind in den Unteransprüchen beschrieben.

Die Erfindung wird nachstehend anhand der Zeichnungen näher beschrieben.

### Dabei zeigen:

Fig. 1 eine schematische Darstellung einer Klauenpolanordnung,
Fig. 2 den Aufbau eines Klauenpols im Längsschnitt,
Fig. 3 den Aufbau eines Klauenpols im Querschnitt
Fig. 4 die Anordnung von Permanentmagneten zwischen den Klauenpolen und
Fig. 5 die Klauenpolanordnung einer langgestreckten Maschine

Das vom Strom in der Erregerspule 1 erzeugte Magnetfeld hat in der Spule selbst einen axialen Verlauf 2, wie in Fig. 1 dargestellt ist. Es geht dann an der Stirnseite 3, 3a der Spule über in einen radialen Verlauf 4, 4a und wird außen auf die Klauenpole 5, 5a aufgeteilt und dabei wiederum in axialer Richtung 6 in diese Klauenpole hineingeführt, von wo es radial 7 in den Luftspalt 8 übertritt. Durch den Ständer 9 hindurch verläuft es zum benachbarten Rotor-Klauenpol 5a entgegengesetzter Polarität und von dort über den Schenkel 3a analog zurück zum Kern 10 der Erregerspule 1. Wegen dieser mehrfachen Axial-Radial-Feldumlenkung sind die feldführenden Eisenteile des Polrades, d.h. Spulenkern 10, Stirnscheiben 3, 3a und Klauenpole 5, 5a aus massivem Eisen hergestellt. Für das zeitlich allenfalls langsam veränderliche Erregerfeld ist dies kein Problem. Auf den Klauenpolmantelflächen 11 wird dieses Feld jedoch durch die Nutung des Stators schnell moduliert, so daß in den massiven Klauenpolen Wirbelstromverluste auftreten. Um diese zu begrenzen, macht man den Luftspalt 8 zwischen Polrad und Stator größer, als es von der Leistungsfähigkeit her gesehen wünschenswert wäre.

Erfindungsgemäß lassen sich diese durch die Feldpulsation im Luftspalt bedingten Eisenverluste in den massiven Klauenpolen deutlich reduzieren, wenn man die Klauenpole nur im Inneren, d.h. die Kerne, massiv ausführt und sie im Außenbereich mit Blechen ausstattet. Fig. 2 und 3 zeigen dies im einzelnen in Längs- und Querschnitt eines Klauenpols 5. Dieser ist im schraffiertem Bereich massiv und wird an der Mantel- und den Seitenflächen von etwa U-förmigen Blechen 12 umfaßt, die schon vor der Befestigung auf dem Klauenpol als gestanzte Bleche zu einem Paket als Polabschluß zusammengefaßt werden können. Die Klauenpole weisen über ihre axiale Länge gleichmäßige Breite auf. Durch den Luftspalt 8 ist Ständer 9 mit Stator-Arbeitswicklung 21 vom Blech 12 und Klauenpol 5 getrennt.

Die Bleche greifen krallenförmig um den massiven Klauenpolkern, so daß sie den Fliehkräften nicht folgen können. Sie können an den Enden 13 auch mit dem Klauenpolkern verschweißt werden, Zusätzlich werden die Bleche durch Träufeln oder Tränken nachträglich untereinander und mit dem Klauenpolkern verklebt.

In den entlang dem Umfang verlaufenden Blechabschnitt können eine oder mehrere Aussparungen 14 gestanzt werden. Dies erlaubt eine bessere Anpassung der Blech-Innenkontur an den Klauenpolen, ermöglicht aber vor allem eine Behinderung des Ankerquerfeldes.

Mit der durch die Blechung des Klauenpol-Außenbereichs erreichten Wirbelstromverlustminderung ist eine Verminderung des Luftspalts auf etwa die Hälfte möglich. Die Parallelflankigkeit der Klauenpole, die sonst meist etwa sinusförmig angespitzt ineinandergreifen, sorgt für eine Minderung der Eisenverluste im Ständer 9, weil der bei axial "angespitzten" Polen auftretende magnetische Axialfluß im Ständer vermieden wird. Der infolgedessen nichtsinusförmige Zeitverlauf der induzierten Spannung in der Ständerwicklung ist bei offener Schaltung der Wicklung und anschließender Gleichrichtung funktionell ein weiterer Vorteil. Hierdurch und durch den reduzierten Luftspalt erhöhen sich die Luftspaltfeld-Selbst- und -Gegeninduktivitäten und damit der gewünschte Generatorstrom. Der Wirkungsgrad steigt deutlich.

Man kann natürlich die äußere Mantelkontur des Blechpakets mittels des Stanzwerkzeugs auch so gestalten, daß sich ein "Sinus-Pol" ergibt, d.h. eine Luftspalterweiterung zu den tangentialen Polseiten hin mit der Folge sinusförmigerer Spannung.

Fig. 4 zeigt die Kombination obiger Merkmale mit einer unterstützenden Dauermagneterregung mittels tangential wirkender Dauermagnete 15 zwischen den parallelflankigen Klauenpolen. Die Dauermagnete werden zwischen die Seitenflanken der U-Bleche 12 eingesteckt. Sie werden durch Klebung befestigt (etwa zusammen mit der Verklebung der Bleche). Die Dauermagnete werden in radialer Richtung durch die Nasen 16 gesichert. Die Dauermagnete hindern die seitlichen Enden der U-Bleche daran, sich infolge der Fliehkraft seitlich aufzubiegen. Wenn die gewünschte Pollückenweite nicht mit der (tangentialen) Magnetdicke übereinstimmt, muß die äußere Blechkontur geeignet angepaßt werden. Vorzugsweise wird ein Absatz in der Kontur vorgesehen. Auch "Sinus-Pol"-Ausgestaltung ist möglich.
Ähnlich wie bei der üblichen Klauenpolausführung ist auch eine schleifringlose Ausführung mit stillstehenden Erregerspulen durchführbar. Dann müssen allerdings beide Klauenpolfingersysteme ihr Magnetfeld über ein stillstehendes ringzylinderartiges Leitstück und zwei zusätzliche Luftspalte zugeführt erhalten. In diesem Fall ist eine Unterstützung durch Dauermagnete der vorgenannten Art besonders wertvoll.

Da bei höheren Leistungen, wie einleitend bereits erwähnt, die magnetisch axial wirkende Erregerspule den gesamten Erregernutzfluß und den Streufluß aller p Rotorpole einer Klauenseite umfaßt, muß das durch die Erregerspule axial hindurchgehende Erregerjoch einen durch die magnetische Sättigung bedingten Mindestdurchmesser haben, der den Raum für die Erregerspule radial stark einengt, wenn man nicht zu einem größerem Rotordurchmesser übergeht.

Bei größerem Durchmesser wird eine höhere Polpaarzahl nötig. Dies führt bei gegebener Drehzahl zu einer erhöhten Ummagnetisierungsfrequenz und höheren Verlusten.

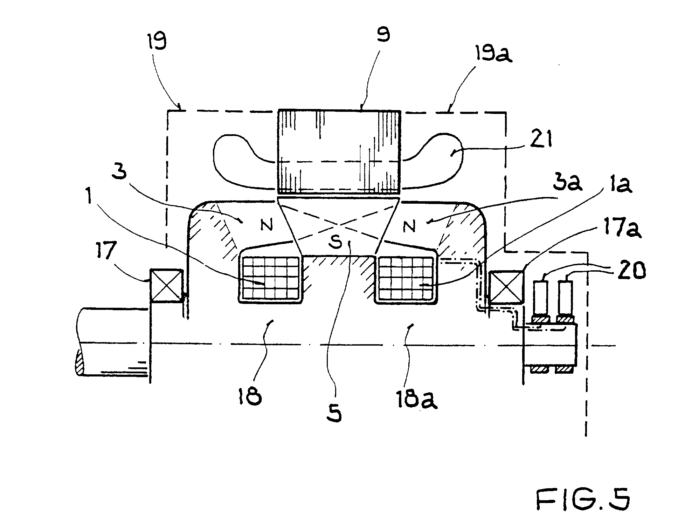

In einer weiteren Ausgestaltung der Erfindung läßt sich diese Problematik dadurch umgehen, daß man die Klauenpole anders erregt. Man läßt hierzu nicht mehr zwei ähnliche Klauenpolfingersysteme (eines liefert p Nordpole, das andere p Südpole) mit den Polfingern ineinandergreifen, so daß sie innerhalb der Bohrung des Statorblechpakets in Umfangsrichtung abwechselnd Nord- und Südpole bilden, sondern man ordnet axial in der Ebene des Statorblechpakets 9 ein Klauenpolzahnrad 5 mit p Polzähnen an, in dessen Lücken axial von beiden Seiten je ein Klauenpolfingersystem 3, 3a mit ^{p}/₂ Fingern abwechselnd hineingreift. Die entsprechende Anordnung ist in Fig. 5 dargestellt. Auf den axialen Stirnseiten des ^{p}/₂ Klauenpolzahnrads sind Erregerspulen 1, 1a vorzusehen, deren Erregerjoch 18, 18a nur den Fluß von den ^{p}/₂ Polen des daneben anschließenden Klauenpolfingersystems zu führen hat. Infolgedessen kann man die Blechpaket-Länge des Stators bei vorgegebenem Durchmesser deutlich vergrößern, woraus sich vorteilhafte Konsequenzen für den für eine gewünschte Leistung erforderlichen radialen Bauraum und die Ummagnetisierungsverluste ergeben. Die magnetischen Erregungen der Spulen wirken gegeneinander, so daß das in der Mitte liegende Klauenpolzahlrad
p Nordpole aufweist und die beiden Klauenpolfingersysteme zusammen p Südpole in den Lücken des Klauenpolzahnrads 5 liefern.

Wichtig ist, daß die magnetischen Widerstände in den äußeren Jochen der Klauenpole 3, 3a sich nicht zu sehr von denen im Klauenpolzahnrad 5 unterscheiden.

Dieses Prinzip der axialen Flußaufteilung kann auf mehr als zwei nebeneinanderliegende Einheiten, die auf der gleichen Achse sitzen, erweitert werden.

Das Klauenpolrad läuft in Lagern 17, 17a wobei die Lagerschilde 19, 19a das Statorblechpaket 9 stützen. Zur Stromzuführung sind die üblichen Schleifringe 20 vorgesehen.

## Patentansprüche

1. Klauenpolmaschine mit einem Stator und einem Rotor und einer auf einen massiven Kern im Rotor gewickelte Erregerspule (1), wobei sich der massive Kern in zwei Klauenpolsternen in radialer Richtung fortsetzt, die in axial sich abwechselnd von zwei Seiten ausgehenden Klauenpolen (5, 5a) enden,
**dadurch gekennzeichnet,**
**daß** auf den massiven, radial nach außen gekehrten Teilen der Klauenpolen (5, 5a) U-förmige Bleche (12) aufgebracht sind, wobei die Bleche in axialer Richtung aufeinander geschichtet sind, um Wirbelströme zu verhindern.

2. Klauenpolmaschine nach Anspruch 1,
**dadurch gekennzeichnet,**
**daß** die gestanzten Bleche die tangentialen Seitenflächen der Klauenpole (5, 5a) keilförmig umgreifen, so daß sie den Fliehkräften nicht folgen können.

3. Klauenpolmaschine nach Anspruch 1 oder 2,
**dadurch gekennzeichnet,**
**daß** die Bleche (12) an den Enden (13) mit dem Klauenpolkern verschweißt sind.

4. Klauenpolmaschine, nach Anspruch 1 oder 2,
**dadurch gekennzeichnet,**
**daß** die Bleche (12) untereinander und mit dem Klauenpolkern (5) verklebt sind.

5. Klauenpolmaschine nach einem der Ansprüche 1-4,
dadurch gekennzeichnt,
daß in die Bleche (12) eine Aussparung (14) gestanzt ist.

6. Klauenpolmaschine nach einem der Ansprüche 1 bis 5,
**dadurch gekennzeichnet,**
**daß** der Luftspalt zum Eisen des Ständers (9) konstante Weite aufweist.

7. Klauenpolmaschine nach einem der Ansprüche 1 bis 5,
**dadurch gekennzeichnet,**
**daß** der Luftspalt von den Klauenpolen zum Ständer (9) so gestaltet ist, daß sich ein Sinus-Pol ergibt.

8. Klauenpolmaschine nach einem der Ansprüche 1 bis 7,
**dadurch gekennzeichnet,**
**daß** tangential wirkende Dauermagnete mechanisch als Sicherung gegen das Aufbiegen der U-Blech-Schenkel dienen.

9. Klauenpolmaschine nach einem der Ansprüche 1 bis 8,
**dadurch gekennzeichnet**
**daß** die Erregerwicklung (1, 1a) axial in magnetisch gegeneinander wirkender Weise aufgeteilt ist, daß zwischen den Erregerwicklungen ein Polzahnrad (5) mit p Polzähnen gleicher Polarität vorhanden ist und an den äußeren Enden mit je einem Klauenpolrad mit entweder ^{p}/₂ Klauenpolen mit ganzer magnetisch aktiver Länge oder p Klauenpolen mit halber magnetischer Länge ausgestattet ist, die sämtlich gleiche Polarität aufweisen.

## Claims

1. Claw pole machine with a stator and a rotor and an excitation coil (1) wound on a solid core in the rotor, wherein the solid core continues in radial direction in two claw pole stars which end in claw poles (5, 5a) going out axially alternately from two sides; **characterised in that** U-shaped plates (12) are mounted on the solid, radially outwardly swept parts of the claw poles (5, 5a), wherein the plates are layered one on the other in axial direction in order to prevent eddy currents.

2. Claw pole machine according to claim 1, **characterised in that** the punched plates engage in wedge-shaped manner over the tangential side surfaces of the claw poles (5, 5a) so that they cannot follow the centrifugal forces.

3. Claw pole machine according to claim 1 or 2, **characterised in that** the plates (12) are welded at the ends (13) with the claw pole star.

4. Claw pole machine according to claim 1 or 2, **characterised in that** the plates (12) are glued with one another and with the claw pole star (5).

5. Claw pole machine according to one of claims 1 to 4, **characterised in that** a recess (14) is punched into the plates (12).

6. Claw pole machine according to one of claims 1 to 5, **characterised in that** the air gap relative to the iron of the stator (9) has a constant width.

7. Claw pole machine according to one of claims 1 to 5, **characterised in that** the air gap from the claw poles to the stator (9) is so designed that a sine pole results.

8. Claw pole machine according to one of claims 1 to 7, **characterised in that** tangentially acting permanent magnets mechanically serve as security against bending out of the limbs of the U-shaped plates.

9. Claw pole machine according to one of claims 1 to 8, **characterised in that** the excitation winding (1, 1a) is axially divided in magnetically reciprocally acting manner, that a pole toothed wheel (5) with p pole teeth of the same polarity is present between the excitation windings and is furnished at each of the outer ends with a respective claw pole wheel with either p/2 claw poles with the entire magnetically acted length or p claw poles with half the magnetic length, which all have the same polarity.

## Revendications

1. Machine à pôles à griffes équipée d'un stator et d'un rotor et d'une bobine d'excitation (1) bobinée sur un noyau massif dans le rotor, le noyau massif se prolongeant en deux noyaux de pôles à griffes, qui se termine axialement en pôles à griffes (5, 5a) alternés partant de deux côtés, **caractérisée en ce que** sur les parties massives tournées radicalement vers l'extérieur des pôles à griffes (5, 5a) sont disposées des tôles (12) en forme de U, les tôles étant empilées en direction axiale afin d'éviter des courants de Foucault.

2. Machine à pôles à griffes selon la revendication 1, **caractérisée en ce que** les tôles estampées entourent en forme de coin les surface latérales tangentielles des pôles à griffes (5, 5a), de sorte qu'elles ne peuvent pas suivre les forces centrifuges.

3. Machine à pôles à griffes selon la revendication 1 ou 2, **caractérisée en ce que** les tôles (12) sont soudées aux extrémités (13) avec le noyau des pôles à griffes.

4. Machine à pôles à griffes selon la revendication 1 ou 2, **caractérisée en ce que** les tôles (12) sont collées entre elles et au noyau (5) des pôles à griffes.

5. Machine à pôles à griffes selon l'une des revendications 1 à 4, **caractérisée en ce que** dans les tôles (12) est estampé un évidement (14).

6. Machine à pôles à griffes selon l'une des revendications 1 à 5, **caractérisée en ce que** l'entrefer présente une largeur constante pour le fer du stator (9);

7. Machine à pôles à griffes selon l'une des revendications 1 à 5, **caractérisée en ce que** l'entrefer des pôles à griffes pour le stator (9) est façonné de manière à obtenir un pôle sinusoïdal.

8. Machine à pôles à griffes selon l'une des revendications 1 à 7, **caractérisée en ce que** des aimants permanents agissant tangentiellement servent mécaniquement en tant que sécurité contre la courbure des branches des tôles en U.

9. Machine à pôles à griffes selon l'une des revendications 1 à 8, **caractérisée en ce que** l'enroulement d'excitation (1, 1a) est réparti axialement de manière agissant magnétiquement de façon opposée, **en ce qu'**entre les enroulements d'excitation est prévue une roue dentée polaire (5) avec p dents polaires de même polarité et aux extrémités extérieures avec une roue polaire à griffes avec, soit p/2 pôles à griffes de longueur totalement active magnétiquement, soit p pôles à griffes de longueur magnétique moitié, qui présentent tous la même polarité.
